(19) Europäisches Patentamt
European Patent Office
Office européen des brevets

(11) **EP 4 362 482 A1**

(12) **EUROPEAN PATENT APPLICATION**
published in accordance with Art. 153(4) EPC

(43) Date of publication:
**01.05.2024 Bulletin 2024/18**

(21) Application number: **22863902.7**

(22) Date of filing: **18.03.2022**

(51) International Patent Classification (IPC):
***H04N 23/60*** (2023.01)    ***H04N 23/00*** (2023.01)

(52) Cooperative Patent Classification (CPC):
**G06T 5/70; H04N 23/54; H04N 23/56; H04N 23/631**

(86) International application number:
**PCT/JP2022/012759**

(87) International publication number:
**WO 2023/032312 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.08.2021 JP 2021139934**

(71) Applicant: **OMRON Corporation
Kyoto 600-8530 (JP)**

(72) Inventors:
• **KOMATSU, Yukihiro
  Kyoto-shi, Kyoto 600-8530 (JP)**
• **IKEDA, Yasuyuki
  Kyoto-shi, Kyoto 600-8530 (JP)**

(74) Representative: **Isarpatent
Patent- und Rechtsanwälte
Barth Hassa Peckmann & Partner mbB
Friedrichstraße 31
80801 München (DE)**

(54) **IMAGING SYSTEM AND METHOD FOR CONTROLLING SAME**

(57)    A processing apparatus includes: an image acquisition unit configured to acquire an original image captured by a polarization camera in a state where an illumination apparatus illuminates a transparent object: a polarization extraction unit configured to execute a polarization extraction process that extracts, for each of pixels of the original image, polarization information that is information regarding polarization derived from specular reflection on the transparent object; an image generation unit configured to generate a polarization information image obtained by imaging the polarization information, based on an extraction result of the polarization extraction process; and a reception unit configured to receive a change in one or more parameters to be used in the polarization extraction process.

FIG. 4

EP 4 362 482 A1

**Description**

TECHNICAL FIELD

The present invention relates to a technique for imaging a transparent object.

BACKGROUND ART

A technique for imaging a transparent object by using a polarization camera that includes an imaging element in which polarizers with different transmission axis directions are regularly arranged is known (see Patent Document 1). Such a technique is expected to be applied to, for example, detection and inspection of an article made of glass or a transparent resin.

CITATION LIST

PATENT LITERATURE

Patent Document 1: Japanese Unexamined Patent Publication No. 2020-17688

SUMMARY OF THE INVENTION

PROBLEMS TO BE SOLVED BY THE INVENTION

When light is applied to the transparent object, part of the light is specularly reflected at the surface of the transparent object. The specularly reflected light has polarization characteristics and can thus be observed by a polarization camera, and based on the observation result, the surface (reflection surface) of the transparent object can be imaged.

However, not only specularly reflected light but also light diffusely reflected by a subject, a background, or the like is incident on the polarization camera, which may be a noise factor. In addition, the appearance of polarized light varies depending on the shape and reflection characteristics of the subject. For this reason, it is difficult to prepare highly versatile logic that can exhibit stable performance for any subject or situation.

The present invention has been made in view of the above circumstances, and an object of the present invention is to provide a novel technique for extracting high-quality polarization information from an image of a polarization camera.

MEANS FOR SOLVING THE PROBLEMS

The present invention is an imaging system for imaging a transparent object, the imaging system including: an illumination apparatus configured to illuminate a transparent object; a polarization camera including an imaging element in which polarizers with different transmission axis directions are regularly arranged; and a processing apparatus. The processing apparatus includes an image acquisition unit configured to acquire an original image captured by the polarization camera in a state where the illumination apparatus illuminates the transparent object, a polarization extraction unit configured to execute a polarization extraction process that extracts, for each of pixels of the original image, polarization information that is information regarding polarization derived from specular reflection on the transparent object, an image generation unit configured to generate a polarization information image obtained by imaging the polarization information, based on an extraction result of the polarization extraction process, and a reception unit configured to receive a change in one or more parameters to be used in the polarization extraction process.

According to this configuration, a user can change a parameter for the polarization extraction process as necessary. Therefore, for example, the user adaptively adjusts the parameter according to the shape and state of the transparent object as the subject, the situation of diffuse reflection, and the like, so that high-quality polarization information can be extracted. Note that the reception unit may provide a user interface for changing the parameter and receive the parameter changed by the user on the user interface, or the reception unit may receive a parameter change instruction from the user from an external apparatus through a network.

The polarization extraction process may include a polarization information calculation process that calculates polarization information of a target pixel with reference to pixel values of the target pixel and a neighboring pixel of the target pixel. In this process, one or more neighboring pixels are referenced. When the transmission axis directions of the polarizers are n types ($n \geq 2$), the neighboring pixels may be selected so that n types of pixels respectively corresponding to the n types of transmission axis directions are at least included in a pixel group made up of the target pixel and the neighboring pixels.

In this case, the parameter may include a mask size that is an item defining a range of a neighboring pixel to be referenced when the polarization information is calculated in the polarization information calculation process. For example, an appropriate mask size is set according to the size of the reflection surface of the transparent object as the subject, so that high-quality polarization information can be extracted.

The reception unit may include a user interface that causes a user to select a mask size that is used in the polarization information calculation process from a plurality of mask sizes different from each other. By adopting the selection form, usability can be improved.

The polarization extraction process may include a noise removal process that, after calculation of the polarization information of each of the pixels of the original image by the polarization information calculation process, removes or reduces noise included in a result of the calculation. By performing the noise removal process, high-quality polarization information can be extracted.

The noise removal process may include a process of comparing polarization information between the target pixel and the peripheral pixel to determine the similarity or dissimilarity of the polarization information between the target pixel and the peripheral pixel, and deleting the polarization information of the target pixel when the dissimilarity is determined. Through such a process, polarization information with low reliability can be removed.

The noise removal process may include a process of comparing polarization information between the target pixel and the peripheral pixel to determine the similarity or dissimilarity of the polarization information between the target pixel and the peripheral pixel, and replacing the polarization information of the target pixel with polarization information of a pixel selected from the target pixel and the peripheral pixel when the similarity is determined. Through such a process, the polarization information is smoothed, and hence the SN ratio of the polarization information can be further improved.

The parameter may include an item that defines a range of the peripheral pixel to be compared with the target pixel. Further, the parameter may include an item defining a determination criterion of the similarity or dissimilarity for the polarization information. For example, the parameter is adjusted according to the degree and range of noise included in the result of the polarization information calculation process, whereby the SN ratio can be improved to the extent that overcorrection does not occur.

The parameters may include an item that designates whether to apply the noise removal process to a calculation result of the polarization information calculation process. When the result of the polarization information calculation process is sufficiently high quality, the noise removal process can be skipped to prevent overcorrection and reduce processing time.

The present invention may provide a control method for an imaging system that includes an illumination apparatus, a polarization camera including an imaging element in which polarizers with different transmission axis directions are regularly arranged, and a processing apparatus, the control method including: a step of illuminating a transparent object with the illumination apparatus; a step of capturing an image with the polarization camera; a step of taking an original image captured by the polarization camera into the processing apparatus; and a step of executing, by the processing apparatus, a polarization extraction process that extracts, for each of pixels of the original image, polarization information that is information regarding polarization derived from specular reflection on the transparent object, and generating a polarization information image obtained by imaging the polarization information, based on an extraction result of the polarization extraction process. A parameter to be used in the polarization extraction process is changeable.

The present invention may provide a program for causing a processor to execute each step of the control method.

The present invention may be regarded as an imaging system including at least some of the above units, or may be regarded as a processing apparatus, a control apparatus, or an image processing apparatus. Further, the present invention may be regarded as an apparatus that detects or inspects a transparent object by using a polarization information image obtained by an imaging system. Moreover, the present invention may be regarded as a control method, an image processing method, a detection method, or an inspection method for the imaging system that includes some of the above processes, or may be regarded as a program for implementing such a method or a recording medium on which the program is recorded. Note that each of the above methods and processes can be combined with each other as much as possible to constitute the present invention.

ADVANTAGEOUS EFFECT OF THE INVENTION

According to the present invention, high-quality polarization information can be extracted from an image of a polarization camera.

BRIEF DESCRIPTION OF THE DRAWINGS

Fig. 1 is a diagram schematically illustrating an overall configuration of an imaging system according to an embodiment of the present invention.

Fig. 2 is a diagram schematically illustrating a structure of a polarization camera.

Fig. 3A is a view schematically illustrating a structure of an imaging system, and Fig. 3B and Fig. 3C are views illustrating another configuration example of the illumination apparatus.

Fig. 4 is a block diagram illustrating a logical configuration (functional configuration) of a processing apparatus.

Fig. 5A and Fig. 5B are diagrams for explaining specular reflection.

Fig. 6 is a diagram illustrating a method of extracting a polarization component from an image of a polarization camera.

Fig. 7 is a flowchart illustrating an example of the operation of the imaging system.

Fig. 8 is an example of a user interface for inputting image processing parameters.

Fig. 9 is a flowchart for a polarization information calculation process.

Fig. 10A to Fig. 10D are diagrams illustrating examples of neighboring pixels.

Fig. 11A is a view illustrating an example of specular reflection at a curved surface portion, and Fig. 11B is a view illustrating a selection example of a mask size when a range where polarized light is incident is narrow.

Fig. 12 is a view illustrating an example in which a large mask size is suitable.

Fig. 13 is a flowchart for a noise removal process.

Fig. 14A and Fig. 14B are diagrams illustrating examples of a comparison range.

Fig. 15A is a diagram illustrating an application example of the imaging system, Fig. 15B is an example of a normal image, and Fig. 15C is an example of a polarization information image.

DESCRIPTION OF THE EMBODIMENTS

(System Structure)

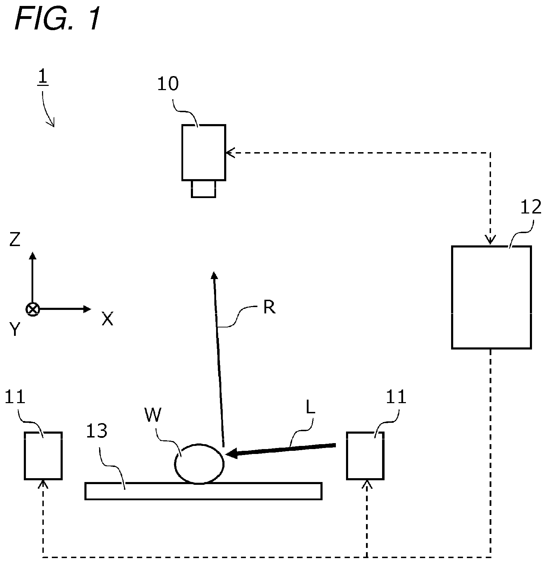

Fig. 1 schematically illustrates an overall configuration of an imaging system according to an embodiment of the present invention. An imaging system 1 is a system for imaging a transparent object using the polarization camera 10, and is used, for example, to detect and inspect a transparent object in a manufacturing line of a factory.

The imaging system 1 mainly includes a polarization camera 10, an illumination apparatus 11, a processing apparatus 12, and a stage 13. The polarization camera 10 is an imaging unit including an imaging element in which polarizers are arranged. The illumination apparatus 11 is a light source for irradiating the subject (transparent object) W placed on the stage 13 with the illumination light L. The processing apparatus 12 is an apparatus that executes the control of the entire imaging system 1 and information processing using an image captured by the polarization camera 10. The stage 13 is an apparatus for placing or holding the subject W.

The polarization camera 10 is disposed to capture an image of the subject W placed on the stage 13 from a direction directly above. Considering an XYZ coordinate system with X and Y axes taken parallel to the stage 13 and a Z axis perpendicular to the stage 13, the optical axis of the polarization camera 10 is parallel to the Z axis. The purpose of the present system is to capture the light specularly reflected by the subject W using the polarization camera 10, and it is thus desirable for the incident angle of the illumination light L on the subject surface to be as close as possible to Brewster's angle. Therefore, in the present embodiment, the illumination apparatus 11 is disposed at substantially the same height as the stage 13 (in practice, the lower edge of the illumination apparatus 11 is about the same height as the upper edge of the stage 13 so that the illumination light L is not blocked by the stage 13), and the illumination light L is incident on the subject W from almost directly across (a direction perpendicular to the Z axis). Such an illumination arrangement is also referred to as low-angle illumination. In the combination of the overhead camera and the low-angle illumination as in the present embodiment, specular reflection R of the illumination light L having an incident angle of about 45 degrees on the subject surface is captured by the polarization camera 10. To bring the incident angle closer to Brewster's angle, an illumination arrangement may be adopted in which the illumination light L is applied from a position lower than the subject W, or the optical axis of the polarization camera 10 may be tilted to the side opposite to the illumination apparatus 11.

(Polarization camera)

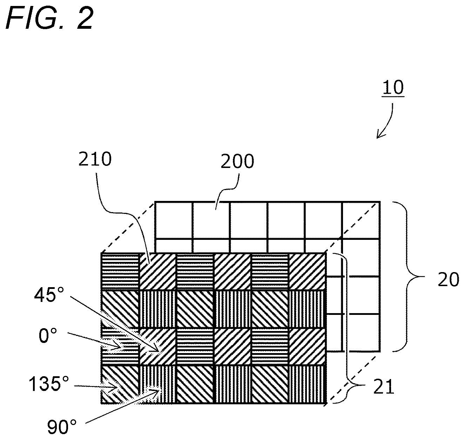

An example of the configuration of the polarization camera 10 will be described with reference to Fig. 2. Fig. 2 is a diagram schematically illustrating the structure of the polarization camera 10.

The polarization camera 10 has a structure in which a polarizer array 21 is combined with an imaging element 20. The imaging element 20 is a device in which photoelectric conversion elements (also referred to as pixels), such as charge-coupled device (CCD) sensors or complementary metal-oxide-semiconductor (CMOS) sensors, are two-dimensionally arranged, and is also called an image sensor. The polarizer array 21 is a device in which many polarizers are two-dimensionally arranged, and is designed in position and size such that one polarizer 210 corresponds to one pixel (light receiving element) 200 of the imaging element 20. The polarizer 210 is an optical element having a property of allowing only linearly polarized light in a specific direction to pass therethrough (the vibration direction of the linearly polarized light transmitted by the polarizer 210 is referred to as the transmission axis direction of the polarizer 210). As illustrated in Fig. 2, the polarizer array 21 of the present embodiment has a structure in which polarizers 210 with four types of transmission axis directions (0 degrees, 45 degrees, 90 degrees, 135 degrees) are regularly arranged. Specifically, an array pattern is adopted in which linear polarization components with different transmission axis directions (0 degrees, 45 degrees, 90 degrees, 135 degrees) are incident on four $2 \times 2$ pixels of the imaging element 20, respectively.

The resolution (pixel pitch) and the size (number of pixels) of the imaging element 20 and the polarizer array 21 may be appropriately designed according to the application of the subject or the image. Methods of achieving the polarizer array 21 include using a wire grid, a photonic crystal, and the like, but any method may be adopted. In addition, although the polarizers with four different transmission axis directions have been combined in four $2 \times 2$ pixels in Fig. 2, the variations and arrangements of the transmission axis directions of the polarizers may take other forms.

(Illumination apparatus)

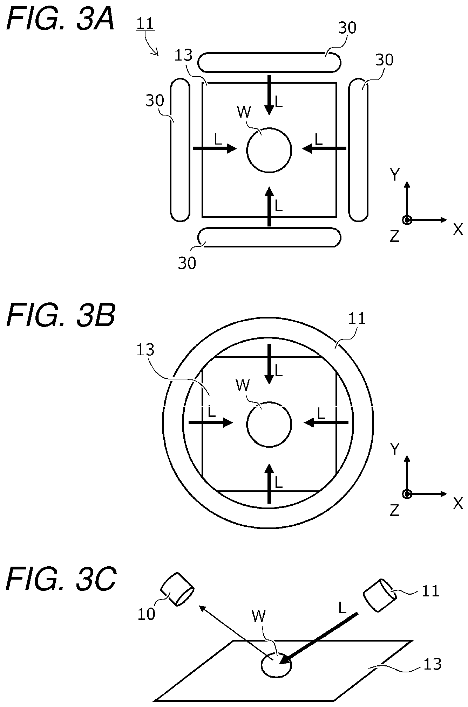

An example of the configuration of the illumination apparatus 11 will be described with reference to Fig. 3A. Fig. 3A is a view schematically illustrating the structure of the illumination apparatus 11 of the present embodiment, and illustrates a state when the stage 13 is viewed from the polarization camera 10 side.

The illumination apparatus 11 includes four rod-shaped illuminators 30 arranged to surround the stage 13. When the four rod-shaped illuminators 30 are simultaneously turned on, the subject W on the stage 13 can be illuminated from four directions (X positive direction, X negative direction, Y positive direction, Y negative direction). In addition, when only one of the rod-shaped illuminators 30 is selectively turned on, the illumination direction can be switched. The rod-shaped illuminator 30 includes, for example, a plurality of light-emitting diode (LED) light sources arranged on a substrate and a diffusion plate arranged to cover the LED light sources.

Note that the structure of the illumination apparatus 11 is not limited to that illustrated in Fig. 3A. For example, the annular illumination apparatus 11 as illustrated in Fig. 3B may be used. With this structure as well, the subject W can be simultaneously illuminated from all directions. The illumination direction can be switched to any direction by selectively turning on the LED light source. The subject W may not be illuminated from all directions but may be illuminated from only a specific direction as illustrated in Fig. 3C. For example, when the existence range of the subject W is limited or the angle of the subject surface to be detected is known or limited, it is sufficient to perform illumination from a necessary direction. Alternatively, even in the case of using the illumination apparatus 11 as illustrated in Fig. 3C, the relative position between the illumination apparatus 11 and the subject W may be changed (e.g., the subject W is rotated on the stage) to capture an image of the subject W from all directions.

(processing apparatus)

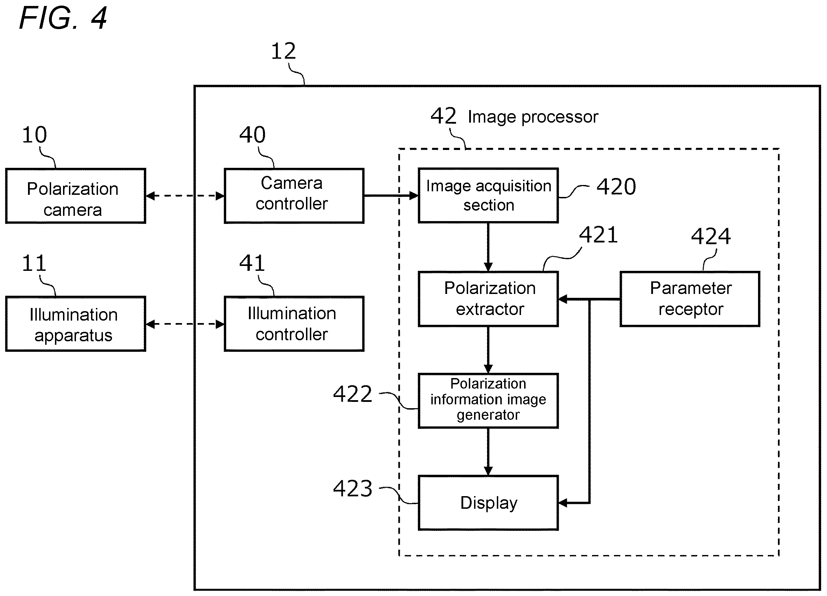

An example of the configuration of the processing apparatus 12 will be described with reference to Fig. 4. Fig. 4 is a block diagram illustrating a logical configuration (functional configuration) of the processing apparatus 12 of the present embodiment.

The processing apparatus 12 includes a camera controller 40, an illumination controller 41, and an image processor 42 as main components. The camera controller 40 controls the polarization camera 10. For example, the camera controller 40 executes the control of imaging conditions (exposure time, gain, etc.) of the polarization camera 10, the taking-in of image data from the polarization camera 10, the calibration of the polarization camera 10, and the like. The illumination controller 41 controls the illumination apparatus 11. For example, the illumination controller 41 executes the control of illumination conditions (light emission intensity, light emission time, etc.), the control of turning on/off for each light source, and the like. The image processor 42 executes processing on the image taken in from the polarization camera 10.

The image processor 42 of the present embodiment has functions such as an image acquisition section 420, a polarization extractor 421, a polarization information image generator 422, a display 423, and a parameter receptor 424. The image acquisition section 420 acquires, via the camera controller 40, an image captured by the polarization camera 10 (hereinafter referred to also as an "original image"). The polarization extractor 421 performs a polarization extraction process that extracts polarization information from the original image. The polarization information is information regarding polarization derived from specular reflection on a transparent object. The polarization information image generator 422 generates an image representing the polarization information (hereinafter referred to also as a "polarization information image"), based on the extraction result of the polarization extraction process. The display 423 performs a process of displaying the generated polarization information image on a display apparatus. The parameter receptor 424 is a function of receiving changes in various condition settings (parameters) that determine the operation of the imaging system 1. Details of each process of the image processor 42 will be described later.

The processing apparatus 12 may be configured by, for example, a computer including a processor such as a central processing unit (CPU) or a graphics processing unit (GPU), a memory as a main storage, a storage as an auxiliary storage, a display apparatus, an input apparatus such as a mouse or a touch panel, a network interface, and the like. As the computer, a general-purpose computer such as a personal computer, a tablet terminal, a smartphone, or a field computer may be used, an embedded computer or a dedicated apparatus may be used, or a computer resource of another apparatus such as the polarization camera 10 or a programmable logic controller (PLC) may be used. The configuration illustrated in Fig. 4 is achieved by loading a program stored in a storage or the like into a memory and causing the processor to execute the program. However, part or all of the configuration illustrated in Fig. 4 may be formed by a dedicated device such as an application-specific integrated circuit (ASIC) or a field-programmable gate array (FPGA). In addition, using cloud computing or distributed computing, part of the configuration illustrated in Fig. 4 or part of the processing may be executed by another apparatus.

(Transparent object detection by polarization camera)

A basic principle of transparent object detection by the polarization camera will be described.

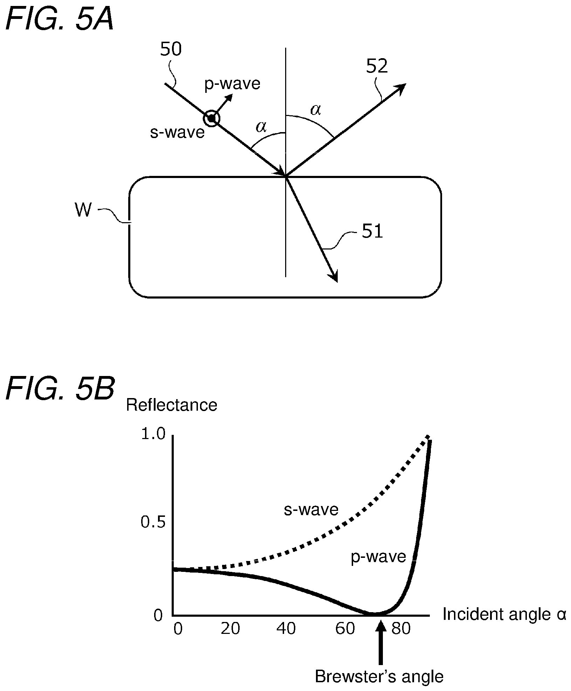

As illustrated in Fig. 5A, when light 50 is obliquely incident on a transparent object W such as glass or a transparent resin, most of the incident light 50 becomes refracted light 51 and passes through the transparent object W, but part of the incident light 50 is specularly reflected at the surface (interface) of the transparent object W to become reflected light 52. In this specular reflection, a difference in reflectance occurs between a p-wave (a polarization component in which the vibration direction of the electric field is parallel to the incident surface) and an s-wave (a polarization component in which the vibration direction of the electric field is perpendicular to the incident surface (i.e., parallel to the reflection surface)) included in the incident light 50. Fig. 5B illustrates an example of a difference in reflectance between the s-wave and the p-wave with the incident angle on the horizontal axis and the reflectance on the vertical axis. As illustrated in this example, the reflectance of the s-wave monotonously increases according to the incident angle $\alpha$, while the reflectance of the p-wave gradually decreases as the incident angle $\alpha$ increases from 0 degrees, and the reflectance becomes 0 at a certain angle (referred to as Brewster's angle). Therefore, the reflected light 52 observed in the case of specular reflection is dominated by the s-wave, that is, a polarization component that vibrates in a direction parallel to the surface of the transparent object W, which is the reflection surface. By using such properties and capturing polarized light with a polarization camera, the surface (reflection surface) of the transparent object W can be imaged.

Meanwhile, light polarized by specular reflection, as well as light that is diffusely reflected by a subject, a background, or similar sources, is incident on the polarization camera. In imaging of a transparent object, a diffusely reflected light component is unnecessary and causes an artifact. Therefore, it is first necessary to extract only a polarization component from an image of the polarization camera. For this purpose, in the present embodiment, a difference in transmission characteristics due to the polarizers is used.

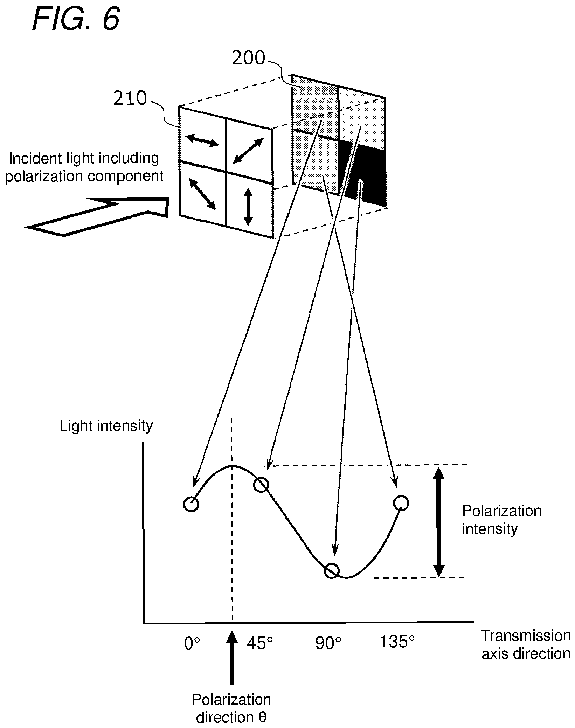

With reference to Fig. 6, a method of extracting a polarization component from an image of the polarization camera will be described. The intensity of the polarization component received by the light receiving element is maximized when a polarization direction $\theta$ coincides with the transmission axis direction of the polarizer, decreases as the transmission axis direction deviates from the polarization direction $\theta$, and is minimized when the transmission axis direction and the polarization direction $\theta$ are orthogonal to each other. That is, when the transmission axis direction of the polarizer is changed from 0 degrees to 180 degrees, the intensity of the polarization component received by the light receiving element changes like a sine wave. On the other hand, the intensity of the diffusely reflected light component included in the incident light is constant regardless of the transmission axis direction of the polarizer. Therefore, only the information of the polarization component included in the incident light can be extracted based on the change in light intensity (dependency on the transmission axis direction) when observed through a plurality of types of polarizers with different transmission axis directions.

For example, as illustrated in Fig. 6, a case is assumed in which incident light, which includes a polarization component in the polarization direction $\theta$, is observed through four types of polarizers 210 at 0 degrees, 45 degrees, 90 degrees, and 135 degrees in the transmission axis directions. At this time, a difference depending on the transmission axis direction has occurred in the value (corresponding to the light intensity of the transmitted light) of the pixel 200 corresponding to each polarizer 210. By fitting a sine wave to the four pixel values, the polarization direction $\theta$ and the polarization intensity of the polarization component can be estimated. In Fig. 6, the angle at which the fitting curve is maximized represents the polarization direction $\theta$ of the polarization component, and the amplitude of the fitting curve represents the polarization intensity (also referred to as polarization degree). By applying such a polarization extraction process to each pixel of the image obtained by the polarization camera 10, it is possible to capture information (polarization direction, polarization intensity, etc.) on the polarization specularly reflected by the transparent object W that exists in the visual field of the polarization camera 10.

The polarization extraction process performed by the polarization extractor 421 of the present embodiment also has the same basic principle of extracting polarization information based on a change in light intensity (transmission axis direction dependency) when observed through a plurality of types of polarizers with different transmission axis directions. However, to further improve accuracy and usability, unique processes have been added, such as the selection of a mask size (a parameter that defines the range of neighboring pixels to be referenced during polarization calculation) and noise removal. Details will be described later.

(Operation example of imaging system)

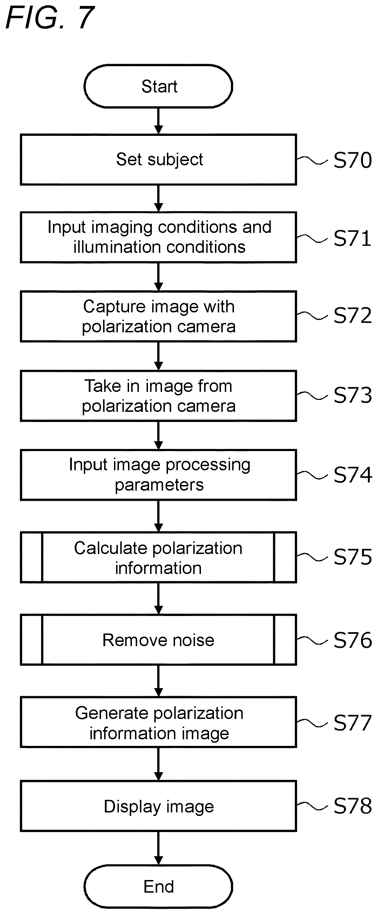

An example of the operation of the imaging system 1 will be described with reference to the flowchart in Fig. 7.

In step S70, a transparent object to be the subject W is placed on the stage 13. The subject W may be conveyed and positioned using a robot or a conveyance apparatus, or an operator may set the subject W on the stage 13.

In step S71, a user inputs the imaging conditions of the polarization camera 10 and the illumination conditions of the illumination apparatus 11 using the user interface provided by the parameter receptor 424 of the processing apparatus 12. Note that when there is no need to change the imaging conditions or the illumination conditions, the process of step S71 may be skipped.

In step S72, an image of the subject W is captured. Specifically, the illumination controller 41 of the processing apparatus 12 turns on the illumination apparatus 11 according to the given illumination conditions, and irradiates the subject W with illumination light. With the subject W illuminated, the camera controller 40 then controls the polarization camera 10 according to the given imaging conditions to capture an image of the subject W.

In step S73, the image acquisition section 420 of the processing apparatus 12 takes in the image (original image) captured in step S72 from the polarization camera 10. The taken-in original image data is stored in a memory or a storage and used for the processes by the image processor 42.

In step S74, the user inputs image processing parameters, which will be used by the image processor 42, by using the user interface provided by the parameter receptor 424. When no image processing parameter needs changing, the process of step S74 may be skipped.

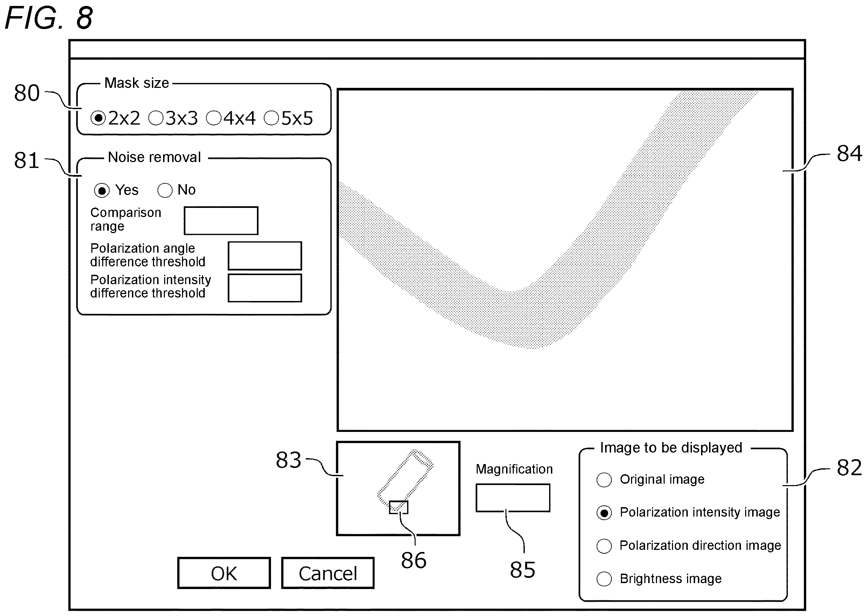

Fig. 8 is an example of a user interface (UI) for inputting image processing parameters provided by the parameter receptor 424. The UI screen includes a mask size setting 80, a noise removal setting 81, a display image setting 82, an entire image display area 83, an enlarged image display area 84, and an enlargement setting 85. The mask size setting 80 is a UI for setting a "mask size" that defines the range of neighboring pixels to be referenced when polarization information is calculated from the original image. In the example in Fig. 8, the mask size is selected from $2 \times 2$, $3 \times 3$, $4 \times 4$, and $5 \times 5$, but the user may input any size. The noise removal setting 81 is a UI for setting conditions related to a "noise removal process" to remove or reduce noise included in the polarization information calculation result. In the example in Fig. 8, it is possible to select whether or not to apply the noise removal process, and in the case of "Yes", it is possible to further input parameters (comparison range, polarization angle difference threshold, polarization intensity difference threshold) used in the noise removal process. The display image setting 82 is a UI for setting the type of image to be displayed in each of the entire image display area 83 and the enlarged image display area 84. In the example in Fig. 8, it is possible to select from an original image, a polarization intensity image, a polarization direction image, and a brightness image. The entire image display area 83 is an area in which the whole image (low resolution) is displayed, and the enlarged image display area 84 is an area in which a portion of the image (a portion indicated by a frame 86) is displayed with high resolution. The enlargement setting 85 is a UI for setting the magnification and range of the enlarged image to be displayed in the enlarged image display area 84.

In step S75, the polarization extractor 421 calculates polarization information from the original image taken in in step S73. Details of the polarization information calculation process will be described later.

In step S76, the polarization extractor 421 applies the noise removal process to the calculation result of step S75. When noise removal has been set to "No" in the UI in Fig. 8, the process of step S76 is skipped. Details of the noise removal process will be described later.

In step S77, the polarization information image generator 422 generates a polarization information image, based on the calculation result of the polarization extractor 421. In the present embodiment, three types of images are generated as the polarization information image: a polarization intensity image, a polarization direction image, and a brightness image. The polarization intensity image is an image representing the polarization intensity (degree of polarization) in grayscale, and the polarization direction image is an image representing the polarization direction in grayscale or pseudo color. The brightness image is an image representing the light intensity of the polarization component in grayscale.

In step S78, the display 423 displays the image selected in the display image setting 82 of the UI in Fig. 8 in each of the entire image display area 83 and the enlarged image display area 84.

Here, when the user changes the display image setting 82 on the UI in Fig. 8, the images displayed in the entire image display area 83 and the enlarged image display area 84 are switched accordingly. By using this UI, it is possible to compare the state of the original image with the polarization information (Polarization intensity, polarization direction, brightness). This facilitates operations, such as confirming whether polarization information calculation and noise removal are being appropriately performed or confirming the shape and state of the transparent object. When the mask size setting 80 and the noise removal setting 81 are changed on the UI in Fig. 8, the processes of steps S75 to S78 may be executed again. By using such a UI, it is possible to adjust the image processing parameters (mask size, presence or absence of noise removal, comparison range, threshold, etc.) while confirming the calculation result (polarization information image).

(Polarization information calculation process)

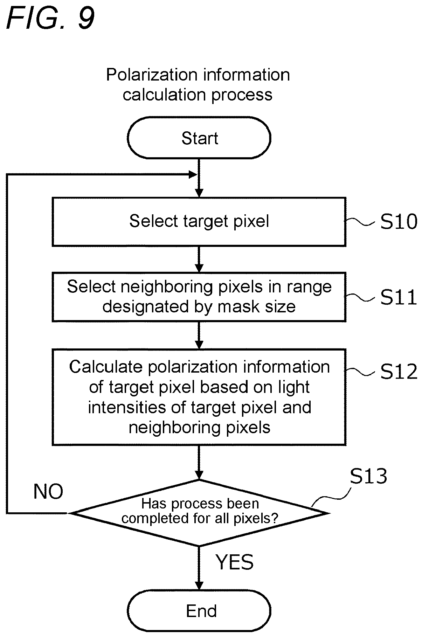

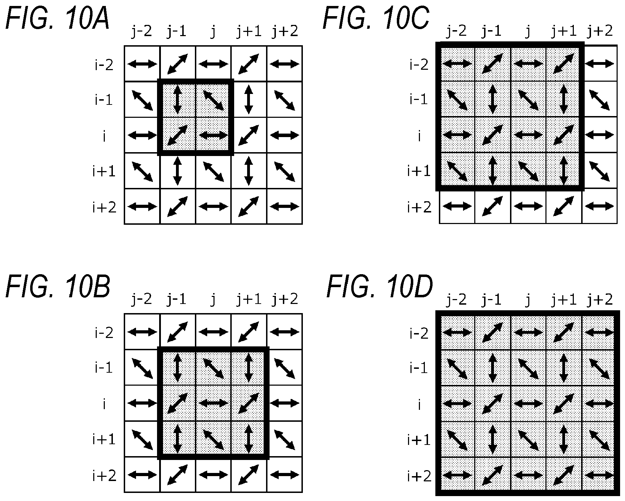

An implementation example of a polarization information calculation process (step S75 in Fig. 7) of the polarization extractor 421 will be described with reference to Fig. 9 and Figs. 10A to 10D. Fig. 9 is a flowchart for the polarization information calculation process, and Figs. 10A to 10D are diagrams illustrating examples of neighboring pixels. Here, the size (the number of pixels) of the original image is set to M rows × N columns, a pixel of i rows and j columns is expressed as (i, j), and the pixel value (light intensity) of the pixel is expressed as I (i, j) (i = 1, 2, ... , M, j = 1, 2, ... , N). Figs. 10A to 10D illustrate part of the original image in an enlarged manner, in which each rectangle represents a pixel, an arrow in the pixel represents a transmission axis direction, and symbols in the margin represent row and column numbers of the pixel.

In step S10, the polarization extractor 421 selects a target pixel to be calculated from the original image. In step S10, the target pixel is sequentially selected from (1, 1) to (M, N).

In step S11, the polarization extractor 421 selects neighboring pixels to be referenced when calculating the polarization information of the target pixel. The range of the neighboring pixels to be selected here is determined by the mask size designated by the mask size setting 80 in Fig. 8. First, a case of a default mask size of 2 × 2 will be described as an example. When the mask size is 2 × 2, as illustrated in Fig. 10A, three pixels (i-1, j-1), (i-1, j), and (i, j-1) adjacent to the target pixel (i, j) are selected as neighboring pixels. When the target pixel is at the boundary of the original image and there is no neighboring pixel, the processes of steps S11 and S12 may be skipped, or padding may be performed with an appropriate value.

In step S12, the polarization extractor 421 calculates polarization information of the target pixel, based on the light intensities (pixel values) of the target pixel and the neighboring pixels. When the light intensities at 0 degrees, 45 degrees, 90 degrees, and 135 in the transmission axis directions are denoted by I1, I2, I3, and I4, respectively, for example, the brightness I0, the polarization direction $\theta$, and the polarization intensity D of the target pixel are obtained by the following equations.

## [Mathematical Expressions 1]

$$I0 = \frac{I1+I2+I3+I4}{2} \qquad (1)$$

$$\theta = \frac{1}{2}tan^{-1}\frac{(I3-I1)}{(I2-I4)} \qquad (2)$$

$$D = sin^{-1}\frac{\sqrt{(I3-I1)^2+(I2-I4)^2}}{I0} \qquad (3)$$

In the example of Fig. 10A, since the transmission axis directions corresponding to the four pixels (i-1, j-1), (i-1, j), (i, j-1), and (i, j) are 90 degrees, 135 degrees, 45 degrees, and 0 degrees, respectively, I1 to I4 in Equations (1) to (3) are given by the following equations.

$$I1 = I (i, j)$$

$$I2 = I (i, j-1)$$

$$I3 = I (i-1, j-1)$$

$$I4 = I\ (i\text{-}1,\ j)$$

A brightness I0 in Equation (1) is an index representing the intensity of incident light that is incident on the target pixel. A polarization direction θ in Equation (2) represents the principal axis direction of a polarization component included in the incident light that is incident on the target pixel. A polarization intensity D in Equation (3) is an index representing the degree of polarization of the polarization component included in the incident light that is incident on the target pixel.

Note that the above Equations (1) to (3) are examples, and indices corresponding to the brightness, polarization direction, and polarization intensity may be calculated by other equations. For example, the coefficients in Equations (1) to (3) may be replaced with other coefficients, or Equation (3) may be replaced with the following Equation (4). [Mathematical Expressions 2]

$$D = \frac{\sqrt{(I3-I1)^2+(I2-I4)^2}}{I0} \qquad (4)$$

In step S13, the polarization extractor 421 confirms whether the polarization information calculation process has been completed for all the pixels of the original image (i.e., whether i = M and j = N), and when there is an unprocessed pixel, the process returns to step S10 and executes the process on the next target pixel.

Through the processes described above, the polarization direction θ, the polarization intensity D, and the brightness I0 are calculated for all the pixels of the original image. The calculation result of the polarization information calculation process is stored in a memory or a storage, for example, in a data format that associates the coordinates (i, j) of each pixel with the polarization direction θ(i, j), the polarization intensity D(i, j), and the brightness I0(i, j), for use in a later process.

Next, process examples when the mask size is larger than 2 × 2 will be described with reference to Figs. 10B to 10D.

As illustrated in Fig. 10B, when the mask size is 3 × 3, in step S11, eight pixels (i-1, j-1), (i-1, j), (i-1, j+1), (i, j-1), (i, j+1), (i+1, j-1), (i+1, j), and (i+1, j+1) adjacent to the target pixel (i, j) are selected as neighboring pixels. In the example of Fig. 10B, the group of nine pixels, which includes the target pixel and the neighboring pixels, includes one pixel at 0 degrees in the transmission axis direction, two pixels at 45 degrees, two pixels at 135 degrees, and four pixels at 90 degrees. When there are a plurality of pixels with the same transmission axis direction as described above, in the calculation of step S12, the representative values for the pixels with the respective transmission axis directions may be substituted into I1 to I4 in Equations (1) to (3).

For example, when an average value is used as the representative value, I1 to I4 are given by the following equations.

$$I1 = I\ (i,\ j)$$

$$I2 = \{I\ (i,\ j\text{-}1) + I\ (i,\ j+1)\}/2$$

$$I3 = \{I\ (i\text{-}1,\ j\text{-}1) + I\ (i\text{-}1,\ j+1) + I\ (i+1,\ j\text{-}1) + I\ (i+1,\ j+1)\}/4$$

$$I4 = \{I\ (i,\ j\text{-}1) + I\ (i,\ j+1)\}/2$$

As the representative value, in addition to the average value, a mode value, an intermediate value, a maximum value, a minimum value, or the like may be used. Instead of using the representative value, I1 to I4 may be estimated by performing a sine wave fitting on the nine pixel values, or the brightness I0, the polarization direction θ, and the polarization intensity D may be calculated directly.

Fig. 10C illustrates an example in which the mask size is 4 × 4. A range with seven pixels (i-2, j-2), (i-2, j-1), (i-2, j), (i-2, j+1), (i-1, j-2), (i, j-2), and (i+1, j-2) further added to the eight neighboring pixels of the mask size of 3 × 3 is selected. In the example of Fig. 10C, the selection range includes four pixels each at 0 degrees, 45 degrees, 90 degrees, and 135 degrees. In this case, as in the case of 3 × 3, the representative values for the respective transmission axis directions may be substituted into I1 to I4, or the sine wave fitting may be performed on the values of 16 pixels.

Fig. 10D illustrates an example in which the mask size is 5 × 5. A selection range with nine pixels (i-2, j + 2), (i-1, j + 2), (i, j + 2), (i+1, j + 2), (i + 2, j-2), (i + 2, j-1), (i + 2, j), (i + 2, j+1), and (i + 2, j + 2) further added to the 15 neighboring pixels of the mask size 4 × 4 is selected. In the example of Fig. 10D, the selection range includes nine pixels at 0 degrees, six pixels at 45 degrees, six pixels at 135 degrees, and four pixels at 90 degrees. In this case, as in the case of 3 × 3, the representative values for the respective transmission axis directions may be substituted into I1 to I4, or the sine wave fitting may be performed on the values of 25 pixels.

In the present embodiment, any change can be made in the mask size, that is, the pixel range referenced at the time of calculating the polarization information. The user may select an appropriate mask size according to the shape and state of the subject, the application of the present system, or the like.

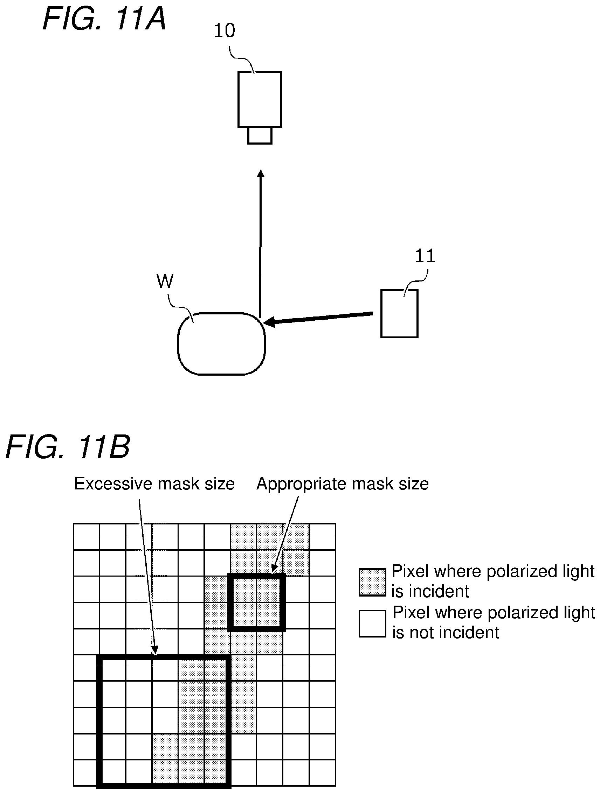

For example, as illustrated in Fig. 11A, in a case where the polarization camera 10 captures specular reflection at a curved surface portion of the subject W, the reflection surface is extremely narrow. Thus, the range where polarized light is incident may be a narrow region that is a few pixels wide (depending on the resolution of the polarization camera 10). In such a case, when the mask size is excessively large, as illustrated in Fig. 11B, a pixel without incidence of polarized light may also be referenced, causing a reduction in the detectability of polarization information. Therefore, it is preferable to select a mask size smaller than the range where polarized light is incident. This enables appropriate extraction of the polarization information in the narrow region.

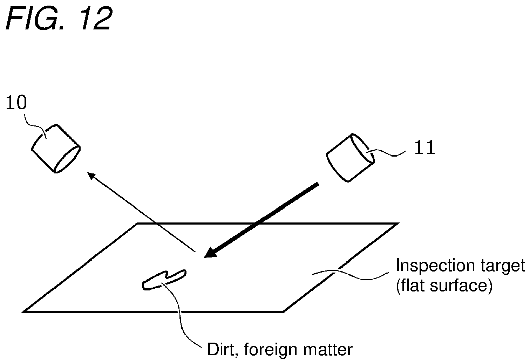

On the other hand, as illustrated in Fig. 12, in a case where dirt, foreign matters, and the like on the surface is inspected using the reflection characteristics (specular reflection and scattering intensity) of the flat surface, it is assumed that similar polarization characteristics will appear in a relatively wide range on the image. In such a case, when the mask size is excessively small, the inspection may be unstable due to being sensitively affected by a local difference in reflectance or the like. It is thus preferable to set a mask size that is somewhat larger to average out disturbance factors due to a local difference in reflectance or the like. This can lead to an improvement in the stability of the inspection.

Note that the present embodiment has shown four mask sizes of 2 × 2, 3 × 3, 4 × 4, and 5 × 5 as examples, but the mask size is not limited thereto. For example, a mask larger than 5 × 5 may be used, or a mask having a non-square shape may be used. In addition, the user may be able to design the mask with desired size and shape.

(Noise removal process)

The polarization information calculation process described above uses the principle of detecting polarization in which a local difference in pixel value is taken as a difference in transmission amount due to a difference in the transmission axis direction of the polarizer to detect polarization. Therefore, for example, when a luminance change with a high spatial frequency occurs in an edge portion or a texture portion of a subject, it may be mistaken for a difference in pixel value due to polarization, leading to erroneous detection of polarization. The noise removal process is a process for removing or reducing noise caused by such erroneous detection from the calculation result of the polarization information calculation process.

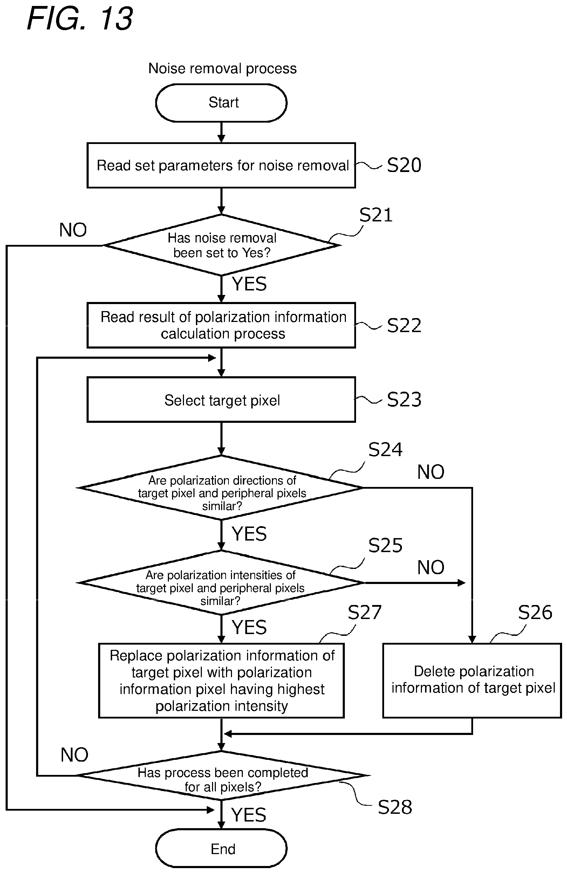

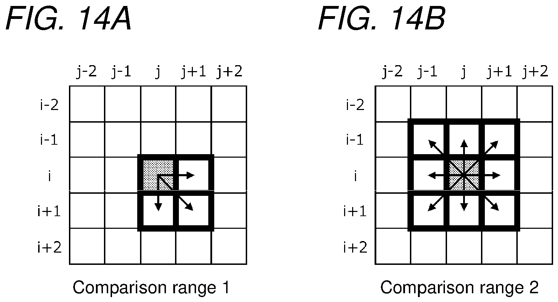

An implementation example of the noise removal process (step S76 in Fig. 7) will be described with reference to Figs. 13, 14A, and 14B. Fig. 13 is a flowchart for the noise removal process, and Figs. 14A and 14B are diagrams illustrating examples of a comparison range.

In step S20, the polarization extractor 421 reads parameters set in the noise removal setting 81 in Fig. 8. Here, four parameters are read: whether or not to perform noise removal, the comparison range, polarization angle difference threshold, and polarization intensity difference threshold. When noise removal has been set to "No", the subsequent processes are skipped (step S21). When the noise removal has been set to "Yes", the process proceeds to step S22.

In step S22, the polarization extractor 421 reads the calculation result of the polarization information calculation process from the memory or the storage. Here, data is acquired where coordinates (i, j) of each pixel are associated with the polarization direction $\theta(i, j)$, the polarization intensity $D(i, j)$, and the brightness $I0(i, j)$.

In step S23, the polarization extractor 421 selects a target pixel to be processed. In step S23, the target pixel is sequentially selected from (1, 1) to (M, N).

In step S24, the polarization extractor 421 compares the polarization directions between the target pixel and its peripheral pixels, and determines whether or not the polarization directions are similar. As illustrated in Fig. 14A, when the comparison range is set to "1", the comparison is performed between the target pixel (i, j) and three peripheral pixels (i, j+1), (i+1, j), ai+1, j+1). Further, as illustrated in Fig. 14B, when the comparison range is set to "2", the comparison is performed between the target pixel (i, j) and eight peripheral pixels (i-1, j-1), (i-1, j), (i-1, j+1), (i, j-1), (i, j+1), (i+1, j-1), (i+1, j), and (i+1, j+1). Then, when even one combination is found where the difference in polarization direction exceeds the polarization angle difference threshold, it is determined as "dissimilar", and the process proceeds to step S26. On the other hand, when it is determined as "similar", the process proceeds to step S25.

In step S25, the polarization extractor 421 compares polarization intensities between the target pixel and its peripheral pixels, and determines whether or not the polarization intensities are similar. The selection of the comparison range is as illustrated in Figs. 14A and 14B. Then, when even one combination is found where the difference in polarization intensity exceeds the polarization intensity difference threshold, it is determined as "dissimilar", and the process proceeds to step S26. On the other hand, when it is determined as "similar", the process proceeds to step S27.

When either the polarization direction or the polarization intensity is "dissimilar", the polarization information of the target pixel is a unique value (outlier) compared to the peripheral pixels, and is more likely to be noise. Therefore, in step S26, the polarization extractor 421 deletes the polarization information (the polarization direction θ and the polarization intensity D) of the target pixel.

When both the polarization direction and the polarization intensity are "similar", in step S27, the polarization extractor 421 selects a pixel having the largest polarization intensity among the target image and the pixels within the comparison range. Then, the polarization extractor 421 replaces the polarization direction and the polarization intensity of the target pixel with the polarization direction and the polarization intensity of the selected pixel. Through this process, a smoothing effect for reducing local variations in polarization direction and polarization intensity can be obtained.

In step S28, the polarization extractor 421 confirms whether the noise removal process has been completed for all the pixels, and when there is an unprocessed pixel, the process returns to step S23 and executes the process on the next target pixel.

Through the process described above, noise (outlier) is removed and smoothing is performed on the polarization direction θ and the polarization intensity D, which are the calculation results of the polarization information calculation process. Note that the corrected data is overwritten and stored in the memory or the storage.

(Application example)

An example in which the imaging system 1 described above is applied to detection and inspection in a manufacturing process for a syringe filled with a medical solution will be described.

In the manufacturing process for a syringe filled with a medical solution, a robot is typically used to pick up and place the syringe and then inject the medical solution. At this time, when the syringe is present at an incorrect position or in a lying posture, there is a risk of damaging the syringe or causing a malfunction in the manufacturing apparatus. Therefore, a mechanism for monitoring the position and posture of the syringe and outputting an error or stopping the apparatus in the case of a problem is desired.

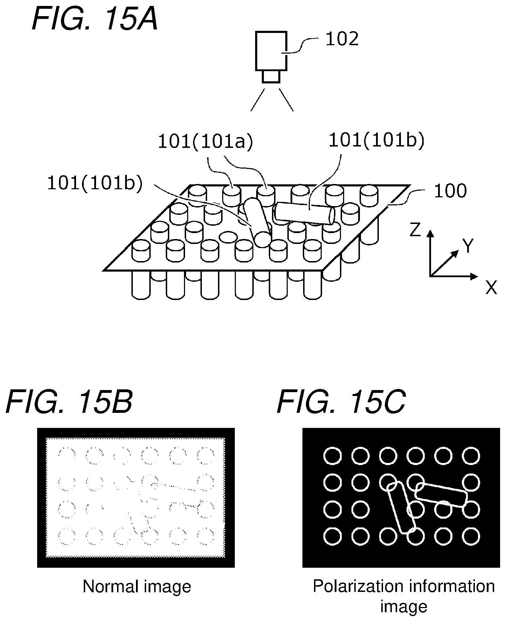

Fig. 15A illustrates a state in which a syringe 101 placed in a nest 100 is observed by an overhead camera 102. The two syringes 101b are laid down without being inserted into the holes of the nest 100. However, since the syringe 101 is colorless and transparent, even when its image is captured using, for example, normal transillumination and an optical camera, the boundary between the syringe 101 and the background (white nest 100) can be hardly identified on the image as illustrated in Fig. 15B, and it is difficult to stably detect the lying syringe 101b.

In contrast, when the polarization information is extracted using the imaging system 1 according to the embodiment of the present invention, only specular reflection on the surface of the syringe 101 can be imaged as illustrated in Fig. 15C. In the polarization information image, a circular image appears for the syringe 101a in the correct posture, and a linear band-shaped image appears for the lying syringe 101b. By using such a polarization information image, it is possible to stably inspect the positions and postures of syringes and detect a syringe in an incorrect position or posture.

A computer image recognition technique may be used to detect a syringe or determines a syringe posture from the polarization information image. For example, a syringe in the correct posture exhibits specular reflection at the inner circle and its surrounding flange. By focusing on this image feature and detecting the shapes of the circle and the flange portion from the polarization information image by a method such as pattern matching, it is possible to automatically recognize the syringe in the correct posture. In the case of a lying syringe, for example, first, a set of pixels (pixel regions) having a specific polarization direction range (e.g., 0° to 60°) and adjacent to each other is extracted, and then a pixel region with a width and a length equal to or larger than a threshold value may be detected from the extracted pixel regions. Through such a process, it is possible to automatically recognize the belt-shaped pixel region of the lying syringe.

(Others)

The above embodiments merely describe, as examples, the configuration examples of the present invention. The present invention is not limited to the specific aspects described above, and various variations can be made within the scope of the technical idea.

For example, the arrangement and configuration of the polarization camera and the illumination apparatus are not limited to those illustrated in Figs. 1 and 3A to 3C, and may be appropriately designed according to the subject and application. That is, it is sufficient that the specular reflection of the illumination light can be observed by the polarization camera. In addition, a plurality of polarization cameras may be provided, or a movable polarization camera or an illumination apparatus may be used.

In the above embodiment, the polarizers at 0 degrees, 45 degrees, 90 degrees, and 135 degrees have been used, but the setting of the transmission axis direction is not limited thereto. It is sufficient that the light having passed through the polarizers with different transmission axis directions can be observed in the imaging element and that the polarization information included in the incident light from the observation result can be extracted.

In the UI screen in Fig. 8, the mask size used in the polarization information calculation process and the parameters used in the noise removal process have been settable, but the configuration of the UI screen and the parameter items are merely examples. Any UI may be used as long as the UI causes the user to change the parameter that is used in the polarization extraction process. That is, it is sufficient that the user himself or herself can appropriately change the logic of the polarization extraction according to the subject, the application, and the like. In the above embodiment, the parameter receptor 424 has provided the user interface for parameter setting, but the parameter receptor 424 may receive a parameter change instruction from the user from an external apparatus through a network.

<Supplementary note 1>

An imaging system (1) for imaging a transparent object (W), the imaging system (1) including:

an illumination apparatus (11) configured to illuminate a transparent object (W);
a polarization camera (10) including an imaging element (20) in which polarizers (210) with different transmission axis directions are regularly arranged; and
a processing apparatus (12),
in which the processing apparatus (12) includes
an image acquisition unit (420) configured to acquire an original image captured by the polarization camera (10) in a state where the illumination apparatus (11) illuminates the transparent object (W),
a polarization extraction unit (421) configured to execute a polarization extraction process that extracts, for each of pixels of the original image, polarization information that is information regarding polarization derived from specular reflection on the transparent object (W),
an image generation unit (422) configured to generate a polarization information image obtained by imaging the polarization information, based on an extraction result of the polarization extraction process, and
a reception unit (424) configured to receive a change in a parameter used in the polarization extraction process.

<Supplementary note 2>

A control method for an imaging system (1) including an illumination apparatus (11), a polarization camera (10) that includes an imaging element (20) in which polarizers (210) with different transmission axis directions are regularly arranged, and a processing apparatus (12), the control method including:

a step of illuminating a transparent object (W) with the illumination apparatus (11);
a step of capturing an image with the polarization camera (10);
a step of taking an original image captured by the polarization camera (10) into the processing apparatus (12) (S73); and
a step of executing the processing apparatus (12), a polarization extraction process (S75, S76) that extracts, for each of pixels of the original image, polarization information that is information regarding polarization derived from specular reflection on the transparent object (W) (S75, S76) and generating, based on an extraction result of the polarization extraction process (S75, S76), a polarization information image obtained by imaging the polarization information (S77),
in which a parameter used in the polarization extraction process is changeable (S74).

DESCRIPTION OF SYMBOLS

1      imaging system
10    polarization camera
11    illumination apparatus
12    processing apparatus
13    stage
20    imaging element
21    polarizer array
30    rod-shaped illuminator

**Claims**

1. An imaging system for imaging a transparent object, the imaging system comprising:

   an illumination apparatus configured to illuminate a transparent object;
   a polarization camera including an imaging element in which polarizers with different transmission axis directions are regularly arranged; and
   a processing apparatus, wherein the processing apparatus includes
   an image acquisition unit configured to acquire an original image captured by the polarization camera in a state where the illumination apparatus illuminates the transparent object,
   a polarization extraction unit configured to execute a polarization extraction process that extracts, for each of pixels of the original image, polarization information that is information regarding polarization derived from specular reflection on the transparent object,
   an image generation unit configured to generate a polarization information image obtained by imaging the polarization information, based on an extraction result of the polarization extraction process, and
   a reception unit configured to receive a change in one or more parameters to be used in the polarization extraction process.

2. The imaging system according to claim 1, wherein the polarization extraction process includes a polarization information calculation process that calculates polarization information of a target pixel with reference to pixel values of the target pixel and a neighboring pixel of the target pixel.

3. The imaging system according to claim 2, wherein the parameters include a mask size that is an item defining a range of a neighboring pixel to be referenced when the polarization information is calculated in the polarization information calculation process.

4. The imaging system according to claim 3, wherein the reception unit includes a user interface that causes a user to select a mask size that is used in the polarization information calculation process from a plurality of mask sizes different from each other.

5. The imaging system according to any one of claims 2 to 4, wherein the polarization extraction process includes a noise removal process that, after calculation of the polarization information of each of the pixels of the original image by the polarization information calculation process, removes or reduces noise included in a result of the calculation.

6. The imaging system according to claim 5, wherein the noise removal process includes a process of comparing polarization information between the target pixel and the peripheral pixel to determine similarity or dissimilarity of the polarization information between the target pixel and the peripheral pixel, and deleting the polarization information of the target pixel when the dissimilarity is determined.

7. The imaging system according to claim 5 or 6, wherein the noise removal process includes a process of comparing polarization information between the target pixel and the peripheral pixel to determine similarity or dissimilarity of the polarization information between the target pixel and the peripheral pixel, and replacing the polarization information of the target pixel with polarization information of a pixel selected from the target pixel and the peripheral pixel when the similarity is determined.

8. The imaging system according to claim 6 or 7, wherein the parameters include an item that defines a range of the peripheral pixel to be compared with the target pixel.

9. The imaging system according to any one of claims 6 to 8, wherein the parameters include an item defining a determination criterion of the similarity or dissimilarity for the polarization information.

10. The imaging system according to any one of claims 5 to 9, wherein the parameters include an item that designates whether to apply the noise removal process to a calculation result of the polarization information calculation process.

11. A control method for an imaging system that includes an illumination apparatus, a polarization camera including an imaging element in which polarizers with different transmission axis directions are regularly arranged, and a processing apparatus, the control method comprising:

a step of illuminating a transparent object with the illumination apparatus;
a step of capturing an image with the polarization camera;
a step of taking an original image captured by the polarization camera into the processing apparatus; and
a step of executing, by the processing apparatus, a polarization extraction process that extracts, for each of pixels of the original image, polarization information that is information regarding polarization derived from specular reflection on the transparent object, and generating a polarization information image obtained by imaging the polarization information, based on an extraction result of the polarization extraction process, wherein a parameter to be used in the polarization extraction process is changeable.

12. A program for causing a processor to execute each step of the control method according to claim 11.

# FIG. 1

*FIG. 2*

FIG. 3A

FIG. 3B

FIG. 3C

FIG. 4

## FIG. 5A

## FIG. 5B

Reflectance

## FIG. 6

Incident light including polarization component

200

210

Light intensity

Polarization intensity

0°   45°   90°   135°   Transmission axis direction

Polarization direction θ

## FIG. 7

```
        ┌─────────────┐
        │    Start     │
        └─────────────┘
               │
               ▼
   ┌─────────────────────────┐
   │      Set subject         │ ~ S70
   └─────────────────────────┘
               │
               ▼
   ┌─────────────────────────┐
   │ Input imaging conditions │ ~ S71
   │  and illumination        │
   │  conditions              │
   └─────────────────────────┘
               │
               ▼
   ┌─────────────────────────┐
   │   Capture image with     │ ~ S72
   │   polarization camera    │
   └─────────────────────────┘
               │
               ▼
   ┌─────────────────────────┐
   │   Take in image from     │ ~ S73
   │   polarization camera    │
   └─────────────────────────┘
               │
               ▼
   ┌─────────────────────────┐
   │  Input image processing  │ ~ S74
   │       parameters         │
   └─────────────────────────┘
               │
               ▼
   ┌─┐┌─────────────────────┐┌─┐
   │ ││ Calculate polarization││ │ ~ S75
   │ ││      information      ││ │
   └─┘└─────────────────────┘└─┘
               │
               ▼
   ┌─┐┌─────────────────────┐┌─┐
   │ ││      Remove noise     ││ │ ~ S76
   └─┘└─────────────────────┘└─┘
               │
               ▼
   ┌─────────────────────────┐
   │  Generate polarization   │ ~ S77
   │   information image      │
   └─────────────────────────┘
               │
               ▼
   ┌─────────────────────────┐
   │      Display image       │ ~ S78
   └─────────────────────────┘
               │
               ▼
        ┌─────────────┐
        │     End      │
        └─────────────┘
```

# FIG. 8

- 80 — Mask size: ⦿2x2 ○3x3 ○4x4 ○5x5
- 81 — Noise removal: ⦿Yes ○No
  - Comparison range
  - Polarization angle difference threshold
  - Polarization intensity difference threshold
- 84
- 83
- 86
- 85 — Magnification
- 82 — Image to be displayed:
  - ○ Original image
  - ⦿ Polarization intensity image
  - ○ Polarization direction image
  - ○ Brightness image
- OK
- Cancel

EP 4 362 482 A1

*FIG. 9*

Polarization information
calculation process

Start

Select target pixel ～S10

Select neighboring pixels in range
designated by mask size ～S11

Calculate polarization information
of target pixel based on light
intensities of target pixel and
neighboring pixels ～S12

S13

NO

Has process been
completed for all pixels?

YES

End

## FIG. 10A

## FIG. 10C

## FIG. 10B

## FIG. 10D

## FIG. 11A

## FIG. 11B

Excessive mask size    Appropriate mask size

Pixel where polarized light
is incident

Pixel where polarized light
is not incident

## FIG. 12

10

11

Inspection target
(flat surface)

Dirt, foreign matter

## FIG. 13

Noise removal process

Start

Read set parameters for noise removal ~ S20

S21

Has noise removal been set to Yes?

NO

YES

Read result of polarization information calculation process ~ S22

Select target pixel ~ S23

S24

Are polarization directions of target pixel and peripheral pixels similar?

NO

YES

S25

Are polarization intensities of target pixel and peripheral pixels similar?

NO

YES

S27

Replace polarization information of target pixel with polarization information pixel having highest polarization intensity

S26

Delete polarization information of target pixel

Has process been completed for all pixels?

NO

YES

S28

End

## FIG. 14A

Comparison range 1

## FIG. 14B

Comparison range 2

## FIG. 15A

## FIG. 15B

Normal image

## FIG. 15C

Polarization information image

## INTERNATIONAL SEARCH REPORT

| | International application No. |
|---|---|
| | **PCT/JP2022/012759** |

### A. CLASSIFICATION OF SUBJECT MATTER

*H04N 5/232*(2006.01)i; *H04N 5/225*(2006.01)i
FI:  H04N5/232; H04N5/225 400; H04N5/225 600

According to International Patent Classification (IPC) or to both national classification and IPC

### B. FIELDS SEARCHED

Minimum documentation searched (classification system followed by classification symbols)

H04N5/232; H04N5/225

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2019/012858 A1 (SONY CORP.) 17 January 2019 (2019-01-17)<br>paragraphs [0030]-[0085] | 1-12 |
| A | WO 2020/054076 A1 (SONY INTERACTIVE ENTERTAINMENT INC.) 19 March 2020 (2020-03-19)<br>paragraphs [0011]-[0097] | 1-12 |
| A | WO 2009/157129 A1 (PANASONIC CORP.) 30 December 2009 (2009-12-30)<br>paragraphs [0048]-[0127] | 1-12 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 May 2022** | **17 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/012759**

| Patent document cited in search report | | | Publication date (day/month/year) | Patent family member(s) | | | Publication date (day/month/year) |
|---|---|---|---|---|---|---|---|
| WO | 2019/012858 | A1 | 17 January 2019 | US 2020/0162680 A1 paragraphs [0093]-[0211] | | | |
| WO | 2020/054076 | A1 | 19 March 2020 | US 2021/0319218 A1 paragraphs [0027]-[0117] | | | |
| WO | 2009/157129 | A1 | 30 December 2009 | US 2010/0283883 A1 paragraphs [0131]-[0216] | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020017688 A